**Europäisches Patentamt**

**European Patent Office**

**Office européen des brevets**

(11) Veröffentlichungsnummer: **0 287 797 B1**

## EUROPÄISCHE PATENTSCHRIFT

(45) Veröffentlichungstag der Patentschrift: **02.01.92**

(51) Int. Cl.⁵: **F04C 18/12**

(21) Anmeldenummer: **88103758.4**

(22) Anmeldetag: **10.03.88**

(54) Zweiwellenvakuumpumpe mit einem Synchronisationsgetriebe.

(30) Priorität: **13.03.87 EP 87103630**

(43) Veröffentlichungstag der Anmeldung:
**26.10.88 Patentblatt 88/43**

(45) Bekanntmachung des Hinweises auf die
Patenterteilung:
**02.01.92 Patentblatt 92/01**

(84) Benannte Vertragsstaaten:
**CH DE FR GB LI**

(56) Entgegenhaltungen:
**CH-A- 244 095**    **CH-A- 304 481**
**DE-B- 1 225 459**   **US-A- 1 852 789**
**US-A- 2 640 428**   **US-A- 2 737 057**
**US-A- 3 121 530**   **US-A- 3 438 279**

(73) Patentinhaber: **LEYBOLD AKTIENGESELL-
SCHAFT**
**Bonner Strasse 498**
**W-5000 Köln 51(DE)**

(72) Erfinder: **Steffens, Ralf**
**Homburger Strasse 22/11**
**W-5000 Köln 51(DE)**
Erfinder: **Gormanns, Helmut**
**Raiffeisenstrasse 5**
**W-5000 Köln 91(DE)**

(74) Vertreter: **Leineweber, Jürgen, Dipl.-Phys.**
**Nagelschmiedshütte 8**
**W-5000 Köln 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Zweiwellenvakuumpumpe mit berührungsfrei im Schöpfraum rotierenden Kolben und mit einem in einem Seitenraum befindlichen Synchronisationsgetriebe, welches zwei Zahnräder mit einer auf der Standardform (DIN 3960) beruhenden Verzahnung umfaßt.

Ein typischer Vertreter einer Zweiwellenvakuumpumpe ist die Wälzkolbenpumpe, bei der sich im Pumpengehäuse zwei symmetrisch gestaltete Kolben zueinander und zum Gehäuse hin berührungsfrei drehen (vgl. US-A-31 21 530). Die beiden Kolben haben ungefähr einen 8-förmigen Querschnitt. Ihre Bewegung wird durch ein Getriebe synchronisiert, das üblicherweise aus zwei Zahnrädern besteht. Das Getriebe ist in einem Seitenraum untergebracht, der durch ein Lagerschild vom Schöpfraum der Wälzkolbenpumpe getrennt ist. Die Wellen durchsetzen das Lagerschild und stützen sich darin in der Regel über Wälzlager ab. Auf den in den Seitenraum hineinragenden Wellenstümpfen sind die Zahnräder befestigt. Die Schmierung der Zahnräder und der Lager erfolgt üblicherweise mittels Öls, das sich in den Seitenräumen befindet und mittels einer Schleuderscheibe verwirbelt wird. Zu den Zweiwellenmaschinen gehören weiterhin Northey-Pumpen, Schraubenkompressoren usw., welche auch als Vakuumpumpen eingesetzt werden.

Zweiwellenvakuumpumpen der betroffenen Art haben den Vorteil, daß im Schöpfraum keinerlei Reibung auftritt, so daß die Arbeitsräume frei von Schmiermitteln gehalten werden können. Sie sind deshalb besonders geeignet für den Einsatz bei Fördermedien, die von kohlenstoffhaltigen Verunreinigungen freigehalten werden müssen. Eine wesentliche Voraussetzung dafür ist eine wirksame Abdichtung der Durchführungen der Wellen zu den seitlichen, Öl enthaltenden Getrieberäumen. Als Dichtung zwischen den Ölräumen und dem Schöpfraum werden üblicherweise Kolbenringabdichtungen eingesetzt. Diese und auch andere bekannte Schöpfraumabdichtungen, z.B. Simmerringe oder Gleitringdichtungen, stellen sämtlich keine zufriedenstellende Lösung der Zweiwellenvakuumpumpe dar, nämlich der sicheren Abdichtung zwischen Schöpf- und Getrieberäumen, um den absolut trockenen (das heißt ölfreien) Arbeitsraum der Pumpe ständig zu garantieren.

Aus der DE-A-33 44 953 ist es bekannt, die Seitenräume einer Wälzkolbenvakuumpumpe zu evakuieren, um dadurch im Bereich der Wellenabdichtungen in Richtung der Seitenräume gerichtete Teilströme des Fördermediums aufrechtzuerhalten. Maßnahmen dieser Art sind aufwendig. Außerdem sind sie bei aggressiven oder toxischen Fördermedien nicht einsetzbar.

Bei der aus der DE-A-33 44 953 bekannten Zweiwellenvakuumpumpe werden für das Synchronisationsgetriebe Zahnräder verwendet, deren Verzahnung eine Standardform (DIN 3960) hat. Der Grund dafür liegt darin, daß Zahnräder dieser Art besonders preiswert sind, da sie in großen Stückzahlen mit Standardwerkzeugen hergestellt werden. Bei derartigen Verzahnungen sind Reibungskräfte nicht zu vermeiden, so daß bisher die Ölschmierung im Getrieberaum mit allen ihren Nachteilen unvermeidlich war.

Aus der DE-B-12 25 459 ist eine Verzahnung bekannt, bei der der Kontakt der Zahnflanken auf die unmittelbare Nähe des Wälzkreises beschränkt ist. Der Vorteil einer derartigen Verzahnung besteht darin, daß auf eine Ölschmierung verzichtet werden kann. Nachteilig ist jedoch, daß die vorbekannte Verzahnung keine Standardform (DIN 3960) hat, so daß der Einsatz dieser Verzahnung im Getrieberaum einer Zweiwellenvakuumpumpe eine Sonderanfertigung der Zahnräder voraussetzen würde. Da die Stückzahlen der hergestellten Zweiwellenvakuumpumpen im Vergleich zur Menge der mit Standardform hergestellten Zahnräder vernachlässigbar klein ist, würde der Einsatz der aus der DE-B-12 25 459 bekannten Verzahnung eine Zweiwellenvakuumpumpe erheblich verteuern.

Der vorliegenden Erfindung liegt die Aufgabe zugrunde, das Synchronisationsgetriebe einer Zweiwellenvakuumpumpe der eingangs genannten Art so zu gestalten, daß eine Ölversorgung nicht mehr erforderlich ist, ohne daß mit dieser Gestaltung eine Steigerung der Herstellkosten der Zweiwellenvakuumpumpe verbunden ist.

Erfindungsgemäß wird diese Aufgabe dadurch gelöst, daß das Zahnprofil der Zahnräder in an sich bekannter Weise derart ausgebildet ist, daß der Kontakt der Zahnflanken auf die unmittelbare Nähe des Wälzkreises beschränkt ist, indem bei einem im übrigen mit der Standardform identischen Zahnprofil bei mindestens einem der beiden Zahnräder die Zahnhöhe $z$ reduziert ist, und zwar derart, daß die wirksame Zahnhöhe oberhalb des Wälzkreises ein Hundertstel bis zwei Fünftel des Moduls $m$ beträgt. Bei einem in dieser Weise ausgebildeten Getriebe ist der Abstand zwischen dem Wälzpunkt und dem am weitesten entfernten Eingriffspunkt sehr klein. Die Bewegung zwischen zwei einander berührenden Zahnflanken, die sich aus Gleit- und Wälzanteilen zusammensetzt, ist auf diese Weise im wesentlichen nur auf den Wälzbereich beschränkt, das heißt, die auftretenden Gleitbewegungen sind minimal. Da im wesentlichen nur die Gleitbewegungen bei Zahnrädern einer Ölschmierung bedürfen, kann bei dem erfindungsgemäß gestalteten Getriebe auf die Verwendung eines Schmiermittels vollständig oder zumindest auf die Verwendung von Öl als Schmiermittel verzichtet werden. Die Gefahr, daß Öl oder Öldämpfe durch die Wellenabdichtungen im Lagerschild in den Schöpfraum dringen, ist damit nicht mehr vorhanden, nachdem auch die Kolbenlagerung ohne Ölschmierung ausgeführt ist; bekanntes Prinzip: fettgeschmierte Wälzlager. Ein weiterer wesentlicher Vorteil besteht darin, daß die erfindungsgemäße Verzahnung - bis auf die Tatsache, daß sie eine stark reduzierte Zahnhöhe hat - nicht von der Standardform abweicht. Die Herstellung von Zahnrädern mit dieser Verzahnung erfordert keine Sonderwerkzeuge. Es kann nach wie vor mit den vorhandenen, der Herstellung von Zahnrädern mit Standardform dienenden Werkzeugen gearbeitet werden. Es ist lediglich erforderlich, als Ausgangswerkstück eine - preiswertere - Scheibe mit reduziertem Kopfkreisdurchmesser einzusetzen. Wegen der reduzierten Zahnhöhe ist weiterhin auch die Bearbeitungsdauer reduziert, so daß sich insgesamt eine Verzahnung ergibt, die nicht nur den Entfall der Ölschmierung ermöglicht, sondern auch noch gegenüber der bisher eingesetzten Verzahnung preiswerter ist.

Da die Größe des Kontaktbereichs der Zähne nicht beliebig reduziert werden kann und von der zu übertragenden Leistung abhängt, werden weitere Maßnahmen vorgeschlagen, die eine Freßgefahr vermeiden. Maßnahmen dieser Art können eine Profilrücknahme der Zähne, vorzugsweise im Tragbereichsanfang, sein. Eine andere Möglichkeit besteht darin, relativ elastische Zahnradseitenbereiche vorzusehen. Durch Maßnahmen dieser Art ist die Freßgefahr im Eingriffsstoß reduziert, das heißt, daß das Auftreten insbesondere eines stemmenden Gleitens während des In-den-Eingriff-Kommens der Zähne minimiert ist.

Mit den bestehenden Maßnahmen ist weiterhin der Vorteil verbunden, daß infolge der weitestgehend reduzierten Gleitgeschwindigkeiten zu Temperaturerhöhungen führende Reibbewegungen nahezu vollständig vermieden sind. Dennoch kann es zweckmäßig sein, weitere Maßnahmen zur Reduzierung des Temperaturniveaus vorzusehen, zumal pumpenseitig üblicherweise Verlustleistungen auftreten, die die Temperatur der Verzahnung erhöhen. Eine zweckmäßige Lösung besteht darin, die Zahnräder in einem Gasstrom (inert und/oder gekühlt) anzuordnen. Dabei kann der Gasstrom aus dem Förderstrom der Pumpe abgezweigt sein oder separat, zum Beispiel mit einer Kühlung, geführt sein. Eine andere Möglichkeit besteht darin, zwischen den Zahnrädern und den Wärme abgebenden Gehäusewänden des Getrieberaumes enge Zwischenräume vorzusehen, damit die Wärmeabfuhr nicht durch große Abstände behindert ist. Diese Maßnahme hat weiterhin den Vorteil, daß dadurch das gesamte Totvolumen der Pumpe minimiert wird, das heißt, bei Pumpvorgängen wird das schädliche Nachströmen von Gas aus den Getrieberäumen reduziert. Schließlich ist auch das gesamte Bauvolumen der Pumpe kleiner.

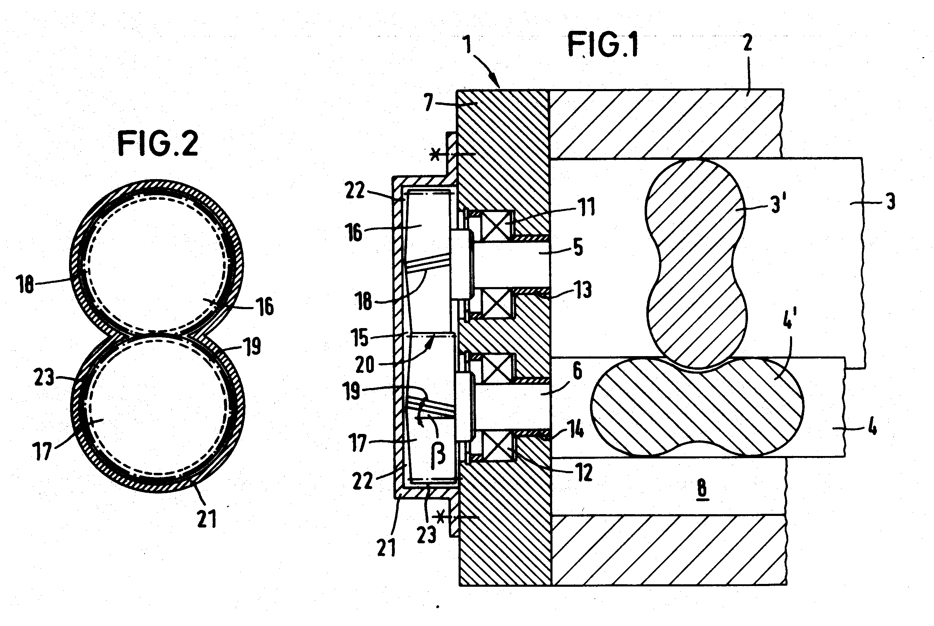

Weitere Vorteile und Einzelheiten der Erfindung sollen anhand von in den Figuren 1 bis 10 dargestellten Ausführungsbeispielen erläutert werden. Es zeigen:

Fig. 1
einen Teil eines Längsschnittes durch beide Achsen einer Wälzkolbenvakuumpumpe,
Fig. 2
einen Querschnitt in Höhe der Zahnräder,
Figuren 3 bis 6
Gestaltungen der Verzahnung der Zahnräder,
Fig. 7
eine Möglichkeit der Eingrenzung eines Schmierfett enthaltenden Raumes,
Fig. 8
einen Längsschnitt durch ein weiteres Ausführungsbeispiel einer Wälzkolbenvakuumpumpe, senkrecht zu den Wellen geschnitten,
Fig. 9
einen der Fig. 8 entsprechenden Schnitt durch ein weiteres Ausführungsbeispiel und
Fig. 10
ein Beispiel mit einem doppelten Zahnradpaar.

Bei der in Fig. 1 dargestellten Wälzkolbenpumpe 1 sind der Gehäusering mit 2 und die darin rotierenden Kolben mit 3 und 4 bezeichnet. Der Querschnitt der Kolben ist separat dargestellt und mit 3' und 4' bezeichnet. Die Wellen 5 und 6 der Kolben 3 und 4 sind in seitlichen Lagerschilden gelagert, von denen nur das räderseitige Lagerschild 7 dargestellt ist. Der Gehäusering 2 und die Lagerschilde bilden den Schöpfraum 8 der dargestellten Vakuumpumpe 1.

Die Wellen 5 und 6 stützen sich über die Lager 11 und 12 im Lagerschild 7 ab. Zwischen den Lagern 11 und 12 sowie dem Schöpfraum 8 befinden sich schematisch dargestellte Wellendichtungen 13 und 14, die den Schöpfraum 8 vom Seitenraum 15 trennen.

Der Seitenraum 15 dient der Aufnahme des Synchronisationsgetriebes, das aus den Zahnrädern 16 und 17 besteht. Die Zahnräder 16 und 17 sind auf den Stümpfen der Wellen 5 und 6 befestigt. Die Zahnzahl der Verzahnungen 18 und 19, die bei 20 ineinandergreifen, ist identisch. Der Seitenraum 15 wird begrenzt durch das Lagerschild 7 und den auf das Lagerschild 7 befestigten Seitenraumdeckel 21.

Wie im einzelnen weiter unten näher dargelegt, ist die Verzahnung 18, 19 der Zahnräder 16, 17 so gestaltet, daß eine Ölversorgung im Seitenraum 15 nicht mehr erforderlich ist. Bei einer besonders günstigen Gestaltung der Verzahnung mit vernachlässigbarer Gleitreibung ist der vollständige Trockenlauf des Getriebes möglich. Bei einer geringfügig noch vorhandenen Gleitreibung reicht bereits ein relativ geringer Fettvorrat (für Vakuumzwecke geeignetes Wälzlagerfett) im Seitenraum 15 zur Schmierung des Eingriffs 20 und der Lager 11, 12 aus.

Es besteht deshalb die Möglichkeit (siehe auch Fig. 2), den Seitenraum wesentlich kleiner zu gestalten, als es bei einem ölversorgten Seitenraum erforderlich ist. Der Deckel 21 ist in seiner Form etwa 8-förmig gestaltet und den Zahnrädern 16, 17 derart angepaßt, daß nur enge Spalte 22 (axial) und 23 (radial) zwischen den Zahnrädern 16, 17 und dem Gehäusedeckel 21 vorhanden sind. In diesen Räumen befindet sich das gegebenenfalls noch erforderliche Fett.

Die Stirnseiten der Zahnräder 16 und 17 sind beim Ausführungsbeispiel nach Fig. 1 derart konisch gestaltet, daß die Breite der Zahnräder in radialer Richtung abnimmt. Dadurch ergibt sich ebenfalls eine konische Gestaltung der axialen Spalte 22. Das beim Eingriff 20 von der Verzahnung weggedrückte Fett wird über die sich verengende Seitenspalte 22 wieder an die Zahnradseitenflächen herangeführt und von dort wegen der Fliehkräfte zurück in Verzahnungsrichtung bewegt.

Das Fett erfüllt damit zwei Aufgaben: Zum einen dient es der Schmierung des Zahneingriffs 20. Zum anderen dient das von der Verzahnung seitlich in Richtung Seitenraumdeckel 32 weggedrückte Fett dem Transport von Wärme von den Zahnrädern auf den Seitenraumdeckel 21. Falls erforderlich, kann die Wärmeabgabe des Deckels 21 nach außen durch Umspülung mit Luft, gekühltem Öl oder direkt mit Wasser verbessert werden.

Als Verzahnung 18, 19 ist eine Schrägverzahnung gewählt mit einem Schrägungswinkel $\beta$, der zweckmäßigerweise $10°$ bis $35°$, vorzugsweise etwa $20°$, beträgt. Die Schrägverzahnung beziehungsweise die Drehrichtung ist so gewählt, daß das Fett infolge der Drehung der Zahnräder vom Schöpfraum weg bewegt wird.

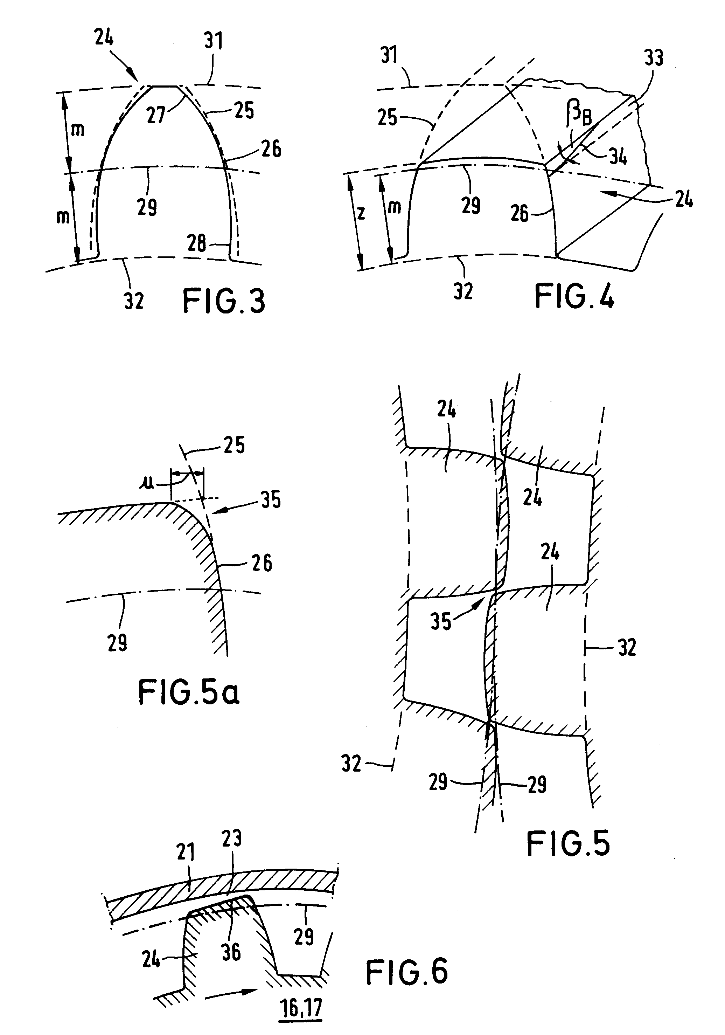

Die Figuren 3 bis 5 zeigen zweckmäßige Verzahnungen mit minimalen Gleitanteilen. Beim Ausführungsbeispiel nach Fig. 3 ist ein Zahn 24 dargestellt, dessen Profil gegenüber der Form einer Standardverzahnung - gestrichelt dargestellt und mit 25 bezeichnet - verändert ist. Seine Flanken 26 sind gegenüber der Standardform im Kopfbereich 27 und im Fußbereich 28 derart weit zurückgenommen, daß die miteinander in Eingriff kommenden Zähne in diesen Bereichen sich nicht mehr berühren. Die in Eingriff kommenden Zähne 24 haben lediglich im Bereich ihres Wälzkreises 29 Kontakt. Weit davon entfernt liegende Eingriffspunkte mit Gleitreibung sind nicht vorhanden. Die Gleitreibung ist dadurch minimiert. In die Fig. 3 sind noch der Kopf- und der Grundkreis der Verzahnung eingezeichnet und mit 31 und 32 bezeichnet. Durch den Modul m ist die Verzahnung charakterisiert. Der Wälzkreis 29 ist bei der Standardverzahnung vom Kopfkreis 31 und vom Grundkreis um die Modulgröße m entfernt. Der Fußkreis und der genannte Grundkreis 32 unterscheiden sich um das sogenannte "Kopfspiel".

Bei den Ausführungsbeispielen nach den Figuren 4 und 5 haben die Zähne 24 ein Zahnprofil mit gegenüber der Standardform 25 stark reduzierter Zahnhöhe z. Die Zahnhöhe z ist nur unwesentlich größer als der standardmäßige Modul m, und zwar um 1/100 bis 2/5 des Modulwertes m. Dadurch ergibt sich ein sehr schmaler Tragbereich 33, in dem Gleitbewegungen vernachlässigbar sind. Da es sich um eine Schrägverzahnung handelt, verlaufen die Berührungslinien schräg durch den Tragbereich 33 (Berührungslinie 34). Der Winkel zwischen der Berührungslinie 34 und den den Tragbereich 33 begrenzenden Linien ist mit $\beta_B$ bezeichnet.

Fig. 5 zeigt eine in Eingriff stehende Verzahnung mit einem Zahnprofil nach Fig. 4. Bei einer Verzahnung dieser Art mit einer theoretischen Evolventenform würde es beim Eingreifen der Zähne jeweils zum sogenannten "Eingriffsstoß" kommen, der durch die Zahnflankenbewegung des "stemmenden" oder auch "schiebenden Gleitens" gekennzeichnet ist. Zur Milderung des Eingriffsstoßes ist bei der Verzahnung nach Fig. 5 eine Profilkorrektur vorgesehen. Diese besteht aus einer geringfügigen Profilrücknahme 35, vorzugsweise nur im Tragbereichsanfang, und ist in Fig. 5a noch einmal vergrößert dargestellt: Die Standardform des Zahnflankenprofilverlaufs ist wiederum mit 25 und der Wälzkreis mit 29 gekennzeichnet. Die Kopfrücknahme 35 wird nun üblicherweise derartig ausgeführt, daß der tatsächliche Zahnflankenverlauf 26 am Kopfkreis gegenüber der Standardform 25 um den Wert $\mu$ zurückgenommen wird und dann allmählich, das heißt im mathematischen Sinn ohne Unstetigkeitsstelle, gleicher Tangentenverlauf im Übergang, in die standardmäßige Evolventenform 25 wieder übergeht. Der Wert für $\mu$ liegt üblicherweise zwischen 2 und 10 $\mu$m, vorzugsweise etwa 4 $\mu$m.

Fig. 6 zeigt eine Verzahnung der in den Figuren 4 und 5 dargestellten Art mit einer geneigten Kopffläche 36. Die Neigung der Kopffläche 36 ist derart gewählt, daß die vorlaufende Kopfkante höher ist als die nachlaufende Kante. Infolge dieser Maßnahme ist die Reibung zwischen der Kopffläche 36 und dem sich im Spalt 23 befindlichen Fett verringert. Dennoch ist die Mitnahme des Fettes zum Zwecke der Schmierung und zum Zwecke des Wärmetransportes gewährleistet. Das von den vorderen Kopfkanten abgeschabte Fett wird zwischen den sich berührenden Flanken als Schmierstoff verwendet und in dabei verbleibende Freiräume gedrückt. Vorzugsweise sind dieses die Zahnfußzwischenbereiche. Nach dem Zahneingriff wird das Fett infolge der Fliehkräfte wieder an den außenliegenden, kühleren Fettring abgegeben und hat damit nach der Schmierung noch Wärme vom Zahnkopf auf die gekühlte Gehäusefläche 21 abgegeben.

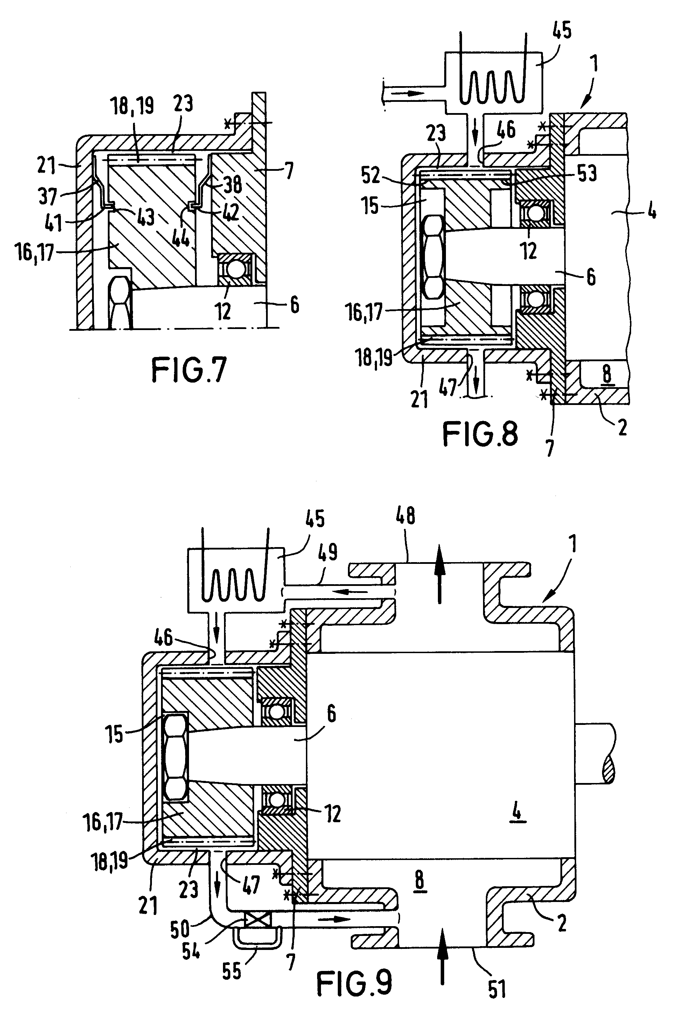

Beim Ausführungsbeispiel nach Fig. 7 sind Maßnahmen getroffen, die den Raum, in dem sich das Fett befindet (vorzugsweise im radialen Spalt 23), abgrenzen. Dazu sind auf beiden Seiten des Zahnrades 16 oder 17 Profilringe 37, 38 vorgesehen, die mit ihrem einen Rand am Seitenraumdeckel 21 beziehungsweise am Lagerschild 7 befestigt sind. Die freien Ränder 41, 42 sind jeweils in Richtung Zahnrad 16, 17 abgewinkelt und ragen in kreisringförmige Nuten 43, 44 am Zahnrad 16, 17 hinein. Durch Spaltdichtungen dieser Art oder auch durch ähnliche, berührende Dichtungen ist sichergestellt, daß das Fett im Verzahnungsbereich verbleibt.

Bei den dargestellten Ausführungsbeispielen ist der Gesamtüberdeckungsgrad $\epsilon_{ges}$ der Verzahnung im wesentlichen durch die Sprungüberdeckung $\epsilon_\beta$ bestimmt. Es gilt nach dem Verzahnungsgesetz

$$\epsilon_{ges} = \epsilon_\alpha + \epsilon_\beta$$

Infolge der Minimierung des Tragbereichs 33 ist die Profilüberdeckung klein gegenüber der Sprungüberdeckung, die durch

$$\epsilon_\beta = \frac{b \cdot \sin\beta}{\pi \cdot m_n}$$

gegeben ist. Dabei bedeuten b die Breite der Verzahnung, $\beta$ der Schrägungswinkel und $m_n$ der Normalmodul. Gemäß dem Verzahnungsgesetz sind b, $\beta$ und $m_n$ so zu wählen, daß $\epsilon_{ges}$ größer als 1 sein muß, vorzugsweise jedoch etwa 2 beträgt.

Neben der bereits erwähnten Kühlung des Seitenraumdeckels 21 von außen mit Luft, Wasser oder Öl besteht die Möglichkeit, die Zahnräder 16, 17 unmittelbar mit einem Gasstrom zu kühlen. Beim Ausführungsbeispiel nach Fig. 8 wird dazu über den Kühler 45 geführtes Gas, vorzugsweise Luft, durch eine radiale Öffnung 46 in den Seitenraum 15 eingeführt und auf der gegenüberliegenden Seite (Öffnung 47) wieder abgeführt. Da die Verzahnung 18, 19 die Wirkung einer Zahnradpumpe hat, ist eine ausreichende Durchströmung des Seitenraumes 15 sichergestellt.

Fig. 8 zeigt noch eine weitere oder zusätzliche Möglichkeit, den Eingriffsstoß zu mildern. Sie besteht darin, relativ elastische Zahnradseitenbereiche (zumindest auf der Seite des Tragbereichsanfanges) vorzusehen. Um eine solche Eigenschaft zu erzeugen, kann zum Beispiel die Breite eines Zahnrades 16 und/oder 17 - bis auf einen umlaufenden Rand 52 beziehungsweise 53 mit der Verzahnung 18 beziehungsweise 19 - zurückgenommen sein. Ein weiterer Vorteil dieser Maßnahme besteht darin, daß die Verzahnung unempfindlicher gegen Verzahnungs- oder Schrägwinkelabweichungen ist.

Fig. 9 zeigt ein Ausführungsbeispiel mit einer internen Gasumspülung. Das Kühlgas wird dem Auslaß 48 der dargestellten Wälzkolbenvakuumpumpe 1 über die Leitung 49 entnommen und - wie zu Fig. 8 beschrieben - durch den Seitenraum 15 hindurchgeführt. Die aus der Öffnung 47 im Seitenraumdeckel 21 austretende Luft wird über die Leitung 50 dem Einlaß 51 der Wälzkolbenpumpe 1 wieder zugeführt.

Die Fig. 9 zeigt eine Ausführung der Gasspülung, die mit der an sich bekannten Umwegleitung bei Wälzkolbenpumpen kombiniert ist. Das Umwegleitungsventil ist mit 54 bezeichnet. Es öffnet automatisch, wenn die Druckdifferenz zwischen Auslaßdruck und Einlaßdruck einen bestimmten zulässigen Wert überschreitet, also in Fällen besonders hoher Belastung und damit Wärmeerzeugung. Beim dargestellten Ausführungsbeispiel tritt dann auch eine verstärkte Kühlung des Getriebes 16, 17 ein. Damit auch bei geschlossenem Umwegleitungsventil 54 eine Kühlung des Getriebes gewährleistet ist, ist dem Ventil 54 ein ständig offener Bypass 55 zugeordnet, durch den die Aufrechterhaltung des notwendigen Minimalgasstromes sichergestellt ist.

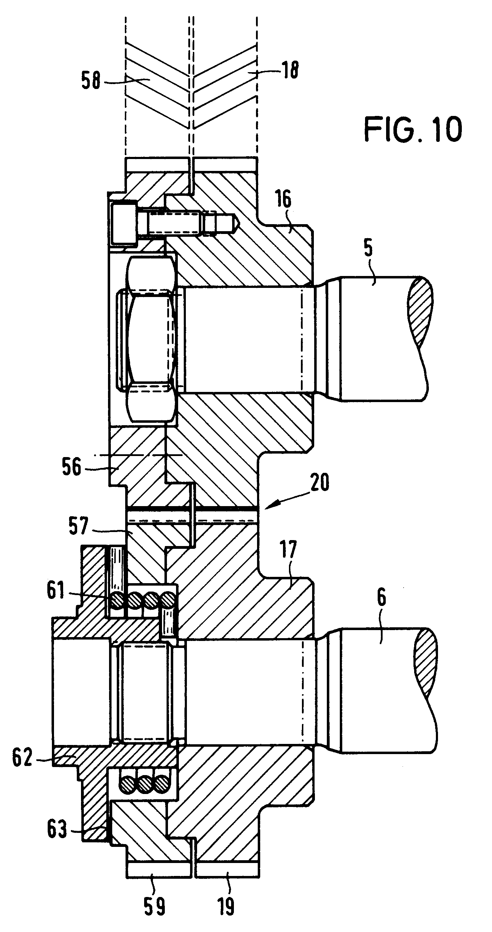

Fig. 10 zeigt nochmals vergrößert das Zahnradpaar 16, 17 mit seinen zugehörigen Wellen 5, 6. Dem Zahnradpaar 16, 17 ist ein Stirnradpaar 56, 57 gleicher Übersetzung zugeordnet, welches als torsionsverspannte Zahnradstufe ausgebildet ist. Die oben schematisch angedeutete Abwicklung der Verzahnung zeigt, daß die Räder 16, 56 in Pfeilstellung angeordnet sind, d. h. ihre Verzahnungen 58 und 18 (bzw. entsprechend 59 und 19) haben gegensinnige Schrägungswinkel.

Das Stirnrad 56 ist fest mit dem Zahnrad 16 verbunden. Das Stirnrad 57 ist mit Hilfe der Verschraubung 61 axial auf der Welle 6 gehaltert. Zwischen dem Stirnrad 57 und dem Zahnrad 17 wirkt die Feder 62 derart, daß sich die Räder gegeneinander entgegen einer einstellbaren Reibkraft um das vorhandene Spiel verdrehen. Ein gegenseitiges Hämmern der Verzahnungen 18, 19 bzw. 58, 59 wird dadurch vermieden. Die Größe der Reibkraft ist u. a. abhängig von einem Ring 63 (z. B. Wellfeder oder Federring), welcher zwischen der Verschraubung 62 und dem Stirnrad 57 angeordnet ist.

**Patentansprüche**

1. Zweiwellenvakuumpumpe mit berührungsfrei im Schöpfraum (8) rotierenden Kolben (3, 4) und mit einem in einem Seitenraum (15) befindlichen Synchronisationsgetriebe, welches zwei Zahnräder (16, 17) mit einer auf der Standardform (DIN 3960) beruhenden Verzahnung (18, 19) umfaßt, dadurch gekennzeichnet, daß das Zahnprofil der Zahnräder (16, 17) in an sich bekannter Weise derart ausgebildet ist, daß der Kontakt der Zahnflanken (26) auf die unmittelbare Nähe des Wälzkreises (29) beschränkt ist, indem bei einem im übrigen mit der Standardform identischen Zahnprofil bei mindestens einem der beiden Zahnräder die Zahnhöhe z reduziert ist, und zwar derart, daß die wirksame Zahnhöhe oberhalb des Wälzkreises (29) ein Hundertstel bis zwei Fünftel des Moduls m beträgt.

2. Vakuumpumpe nach Anspruch 1, dadurch gekennzeichnet, daß die Verzahnung als Schrägverzahnung ausgebildet ist und daß der Schrägungswinkel $\beta$ 10° bis 35°, vorzugsweise etwa 20° beträgt.

3. Pumpe nach einem der vorhergehenden Ansprüche, dadurch gekennzeichnet, daß das Flankenprofil der Zähne (24) derart gestaltet ist, daß Gleitbewegungen während der Phase des Eingreifens der Zähne minimiert sind.

4. Pumpe nach einen der vorhergehenden Ansprüche, dadurch gekennzeichnet, daß das Flankenprofil vorzugsweise im Tragbereichseingang zurückgenommen ist.

5. Pumpe nach einem der vorhergehenden Ansprüche, dadurch gekennzeichnet, daß elastische Zahnradseitenbereiche (52, 53) vorgesehen sind.

6. Pumpe nach Anspruch 5, dadurch gekennzeichnet, daß die Breite der Zahnräder (16 und/oder 17) - bis auf einen umlaufenden Rand (52 bzw. 53) der Verzahnung (18 bzw. 19) - zurückgenommen ist.

7. Pumpe nach einem der vorhergehenden Ansprüche, dadurch gekennzeichnet, daß Mittel zur Kühlung der Zahnräder (16, 17) vorgesehen sind.

8. Pumpe nach einem der vorhergehenden Ansprüche, dadurch gekennzeichnet, daß ein der Form der Zahnräder angepaßter, etwa 8-förmiger Seitenraumdeckel (21) vorgesehen ist.

9. Pumpe nach Anspruch 8, dadurch gekennzeichnet, daß dem Deckel (21) eine Luft-Wasser- oder Öl-Kühlung zugeordnet ist.

10. Pumpe nach Anspruch 8 oder 9, dadurch gekennzeichnet, daß die Spalte (22, 23) im Seitenraum (15) teilweise mit einem Wälzlagerfett gefüllt sind.

11. Pumpe nach Anspruch 10, dadurch gekennzeichnet, daß zumindest eine Seite der Zahnräder (16, 17) derart konisch gestaltet ist, daß die Breite der Zahnräder in radialer Richtung abnimmt.

12. Pumpe nach Anspruch 10 oder 11, dadurch gekennzeichnet, daß die Kopffläche (36) der Zähne (24) derart geneigt ist, daß die vorlaufende Kopfkante eine größere Zahnhöhe hat als die nachlaufende Kopfkante.

13. Pumpe nach einem der Anpsrüche 10, 11 oder 12, dadurch gekennzeichnet, daß sich das Fett ausschließlich im Verzahnungsbereich befindet und daß Dichtungen (37, 38) zur Abgrenzung des Fett enthaltenden Raumes gegenüber dem restlichen Seitenraum (15) vorgesehen sind.

14. Pumpe nach Anspruch 13, dadurch gekennzeichnet, daß berührungsfreie Dichtungen (37, 38) mit in Radialnuten (43, 44) in den Zahnrädern (16 oder 17) hineinragenden Kanten vorgesehen sind.

15. Pumpe nach einem der vorhergehenden Ansprüche, dadurch gekennzeichnet, daß für die Zahnräder (16, 17) eine Gaskühlung vorgesehen ist.

16. Pumpe nach Anspruch 15, dadurch gekennzeichnet, daß der Seitenraumdeckel (21) mit einer Gaszuführungsöffnung (46) und einer Gasabführungsöffnung (47) ausgerüstet ist und daß an die Gaszuführungsöffnung (46) ein mit einem Kühler (45) versehenes Gasleitungssystem angeschlossen ist.

17. Pumpe nach Anspruch 16, dadurch gekennzeichnet, daß der Kühler (45) mit dem Auslaß (48) der Zweiwellenpumpe und die Auslaßöffnung (47) im Seitenraumdeckel (21) mit dem Einlaß (51 ) der Zweiwellenpumpe verbunden ist.

18. Pumpe nach Anspruch 17, dadurch gekennzeichnet, daß die Gaskühlung mit einer Umwegleitung kombiniert ist.

19. Pumpe nach Anspruch 18, dadurch gekennzeichnet, daß in dem Gasleitungssystem (49, 50) ein Umwegleitungsventil (54) angeordnet ist, das von einem einen ständigen Minimalgasstrom sicherstellenden Bypass (55) überbrückt ist.

20. Pumpe nach einem der vorhergehenden Ansprüche, gekennzeichnet durch ein trocken laufendes Getriebe (16, 17).

21. Pumpe nach einem der vorhergehenden Ansprüche, dadurch gekennzeichnet, daß den Zahnrädern (16. 17) eine torsionsverspannte Zahnradstufe mit den Stirnrädern (56, 57) zugeordnet ist.

**Claims**

1. A two-shaft vacuum pump having pistons (3, 4,) rotating in a contact-free manner in the pump chamber (8), and having a synchronisation transmission which is located in a side chamber (15) and which comprises two gear wheels (16, 17) having teeth (18, 19) based on the standard shape (DIN 3960), characterised in that the tooth profile of the gear wheels (16, 17) is constructed in a manner known per se in such a way that the contact of the flanks (26) of the teeth is confined to the immediate vicinity of the pitch circle (29) in that, in a tooth profile which is otherwise identical to the standard shape, the depth z of the teeth is reduced in at least one of the two gear wheels, namely in such a way that the effective depth of the teeth above the pitch circle (29) is one hundredth to two fifths of the modulus m.

2. A vacuum pump as claimed in claim 1, characterised in that the teeth are in the form of helical teeth, and that the angle of slope $\beta$ is 10° to 35°, preferably approximately 20°.

3. A pump as claimed in one of the preceding claims, characterised in that the flank profile of the teeth (24) is constructed in such a way that sliding movements during the meshing phase of the teeth are minimised.

4. A pump as claimed in one of the preceding claims, characterised in that the flank profile is relieved preferably at the start of the bearing zone.

5. A pump as claimed in one of the preceding claims, characterised in that resilient side regions (52, 53) of the gear wheels are provided.

6. A pump as claimed in claim 5, characterised in that the width of the gear wheels (16 and/or 17) is relieved with the exception of a continuous edge (52 or 53) of the teeth (18 or 19).

7. A pump as claimed in one of the preceding claims, characterised in that means for cooling the gear wheels (16, 17) are provided.

8. A pump as claimed in one of the preceding claims, characterised in that an approximately 8-shaped side chamber cover (21) adapted to the shape of the gear wheels is provided.

9. A pump as claimed in claim 8, characterised in that air-water cooling or oil cooling is associated with the cover (21).

10. A pump as claimed in claim 8 or 9, characterised in that the gaps (22, 23) in the side chamber (15) are partially filled with a roller-bearing grease.

11. A pump as claimed in claim 10, characterised in that at least one side of the gear wheels (16, 17) is shaped conically in such a way that the width of the gear wheels decreases in a radial direction.

12. A pump as claimed in claim 10 or 11, characterised in that the top face (36) of the teeth (24) is inclined in such a way that the leading top edge has a greater tooth depth than the trailing top edge.

13. A pump as claimed in one of the claims 10, 11 or 12, characterised in that the grease is located exclusively in the region of the teeth, and that seals (37, 38) are provided for separating the chamber containing the grease from the rest of the side chamber (15).

14. A pump as claimed in claim 13, characterised in that contact-free seals (37, 38) having edges projecting into radial grooves (43, 44) in the gear wheels (16 or 17) are provided.

15. A pump as claimed in one of the preceding claims, characterised in that gas cooling is provided for the gear wheels (16, 17).

16. A pump as claimed in claim 15, characterised in that the side chamber cover (21) is provided with a gas supply opening (46) and a gas discharge opening (47), and that a gas conduit system provided with a cooler (45) is connected to the gas supply opening (46).

**17.** A pump as claimed in claim 16, characterised in that the cooler (45) is connected to the outlet (48) of the two-shaft pump, and the outlet opening (47) in the side chamber cover (21) is connected to the inlet (51) of the two-shaft pump.

**18.** A pump as claimed in claim 17, characterised in that the gas cooling is combined with a by-pass line.

**19.** A pump as claimed in claim 18, characterised in that a by-pass line valve (54) is disposed in the gas conduit system (49, 50) and is bridged by a by-pass (55) which ensures a permanent minimum flow of gas.

**20.** A pump as claimed in one of the preceding claims, characterised by a dry-running transmission (16, 17).

**21.** A pump as claimed in one of the preceding claims, characterised in that the gear wheels (16, 17) have an associated torsionally-braced gear wheel stage comprising the spur gears (56, 57).

**Revendications**

**1.** Pompe à vide à deux arbres comportant des pistons (3, 4) qui tournent, sans contact, dans l'espace d'aspiration (8) ainsi qu'un mécanisme de synchronisation qui se trouve dans un espace latéral (15) et qui comporte deux pignons dentés (16, 17) à denture (18, 19) basée sur la forme standard (DIN 3960), pompe caractérisée par le fait que le profil de denture des pignons dentés (16, 17) est conçu, de façon connue en soi, pour que le contact des flancs (26) des dents soit limité au voisinage immédiat du cercle primitif (29), en ce sens que, dans le cas d'un profil de denture identique, pour le reste, avec la forme standard, la hauteur z de la dent est réduite dans le cas d'au moins l'un des deux pignons dentés et, de façon plus précise, de façon telle que la hauteur utile de la dent au-dessus du cercle primitif (29) vaut un centième à deux cinquièmes du module m.

**2.** Pompe à vide selon la revendication 1, caractérisée par le fait que la denture est conçue sous forme de denture oblique et que l'angle d'obliquité $\beta$ vaut de 10° à 35°, de préférence environ 20°.

**3.** Pompe selon l'une des revendications précédentes, caractérisée par le fait que le profil des flancs des dents (24) a une forme telle que les mouvements de glissement pendant la phase de l'engrènement des dents sont réduits au minimum.

**4.** Pompe selon l'une des revendications précédentes, caractérisée par le fait que le profil des flancs est de préférence en retrait à l'entrée de la zone de portance.

**5.** Pompe selon l'une des revendications précédentes, caractérisé par le fait que sont prévues des zones latérales élastiques (52, 53) des pignons dentés.

**6.** Pompe selon la revendication 5, caractérisée par le fait que la largeur des pignons dentés (16 et/ou 17) va en retrait jusqu'à un bord périphérique (52 ou 53) de la denture (18 ou 19).

**7.** Pompe selon l'une des revendications précédentes, caractérisée par le fait que sont prévus des moyens pour refroidir les pignons dentée (16, 17).

**8.** Pompe selon l'une des revendications précédentes, caractérisée par le fait qu'il est prévu un couvercle (21) de l'espace latéral adapté à la forme des pignon dentés, à peu près en forme de 8.

**9.** Pompe selon la revendication 8, caractérisée par le fait qu'au couvercle (21) correspond un refroidissement à l'air, à l'eau ou à l'huile.

**10.** Pompe selon la revendication 8 ou 9, caractérisée par le fait que les jeux (22, 23) existant dans l'espace latéral (15) sont partiellement remplis d'une graisse pour roulements.

**11.** Pompe selon la revendication 10, caractérisée par le fait qu'au moins une face des pignons dentés (16, 17) a une forme conique telle que la largeur du pignon denté va en diminuant en direction radiale.

**12.** Pompe selon la revendication 10 ou 11, caractérisée par le fait que la surface de tête (36) des dents (24) est inclinée de façon telle que l'arête avant de la tête a une hauteur de dent plus grande que l'arête arrière de la tête.

**13.** Pompe selon l'une des revendications 10, 11 ou 12, caractérisée par le fait que la graisse se trouve exclusivement dans la zone de la denture et que des garnitures d'étanchéité (37, 38) sont prévues pour (limiter l'espace contenant la graisse par rapport au reste de l'espace latéral (15).

14. Pompe selon la revendication 13, caractérisée par le fait que sont prévues des garnitures d'étanchéité sans contact (37, 38) dont des arêtes pénètrent dans des rainures radiales (43, 44) prévues dans les pignons dentés (16 ou 17).

15. Pompe selon l'une des revendications précédentes, caractérisée par le fait qu'un refroidissement par le gaz est prévu pour les pignons dentés (16 ou 17).

16. Pompe selon la revendication 4, caractérisée par le fait que le couvercle (21) de l'espace latéral est équipé d'une ouverture (46) d'amenée du gaz et d'une ouverture (47) d'évacuation du gaz et par le fait qu'à l'ouverture (46) d'amenée du gaz est relié un système de conduites de gaz muni d'un refroidisseur (45).

17. Pompe selon la revendication 16, caractérisée par le fait que le refroidisseur (45) est relié avec la sortie (48) de la pompe à deux arbres et que l'ouverture de sortie (47) prévue dans le couvercle (21) de l'espace latéral est reliée avec l'entrée (51) de la pompe à deux arbres.

18. Pompe selon la revendication 17, caractérisée par le fait que le refroidissement par le gaz est combiné avec une conduite de déviation.

19. Pompe selon la revendication 18, caractérisée par le fait que dans le système de conduites de gaz (49, 50) est disposée une vanne (54) de conduite de déviation qui est shuntée par un bypass (55) qui garantit un flux de gaz minimal permanent.

20. Pompe selon l'une des revendications précédentes, caractérisée par un mécanisme (16, 17) fonctionnant à sec.

21. Pompe selon l'une des revendications précédentes, caractérisée par le fait qu'aux pignons dentés (16, 17) correspond un étage de pignons dentés bridés en torsion comportant les pi ons dentés (56, 57).

FIG.1

FIG.2

EP 0 287 797 B1

FIG.3

FIG.4

FIG.5a

FIG.5

FIG.6

16,17

11

FIG.7

FIG.8

FIG.9

FIG. 10